# EUROPEAN PATENT APPLICATION

(11) **EP 3 358 784 A1**
(43) Date of publication of application: **08.08.2018**
(21) Application number: 16850103.9
(22) Date of filing: 26.05.2016
(51) Int. Cl.: H04L 12/24, H04L 12/26, H04L 12/46

(54) **L3 MAINTENANCE AND DIAGNOSIS METHOD ADOPTED IN L2 AND L3 VPN, AND DEVICE AND SYSTEM UTILIZING SAME**

(30) Priority: 28.09.2015 CN 201510629356
(71) Applicant: ZTE Corporation, Shenzhen, Guangdong 518057 (CN)
(72) Inventor: LIU, Aihua, Shenzhen Guangdong 518057 (CN)
(74) Representative: Novagraaf Technologies
(86) International application number: PCT/CN2016/083519
(87) International publication number: WO 2017/054478

(57) **Abstract**

An L3 maintenance and diagnosis method, apparatus and system in L2+L3 VPN are provided. In the method, an L2 device (41) borrows an L3 address of a corresponding L3 interface (11), and acts as a proxy of the L3 interface to perform L3 maintenance and diagnosis by borrowing the L3 address of the L3 interface (12).

## Description

### Technical field

The present invention relates to, but is not limited to, a Packet Transport Network (PTN), in particular to a Layer 3 (L3) maintenance and diagnosis method, apparatus and system in a Layer 2 and Layer 3 (L2+L3) Virtual Private Network (VPN).

### Background

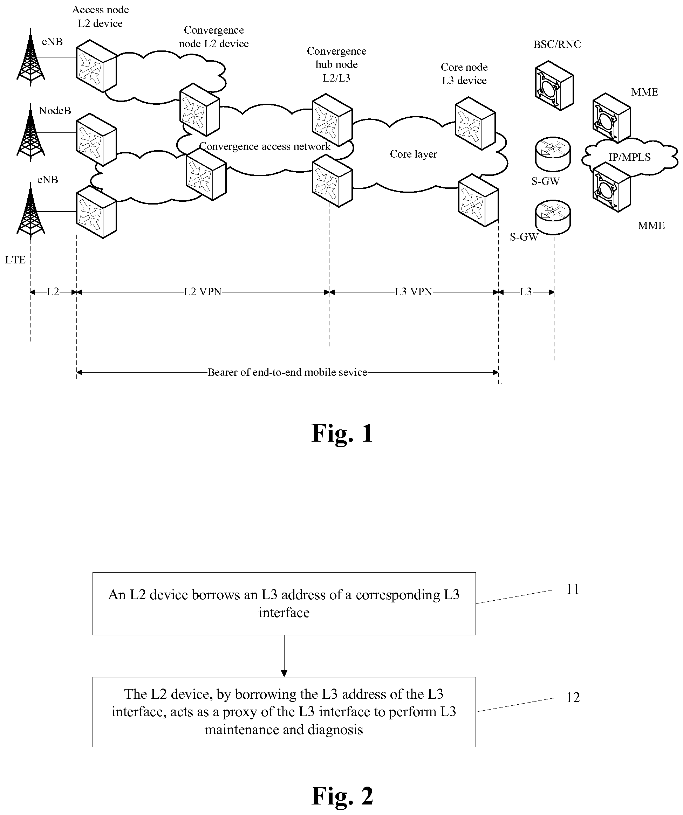

With the development of Internet Protocol-based (IP-based) mobile services as well as the emergence of demands for Long Term Evolution (LTE) service bearers, Mobile backhaul raises higher requirements on the bearer network. For example, the mobile backhaul requires the introduction of L3 scheduling in a core layer of the bearer network, while a simple L2 network is still adopted in an access network, thereby forming a unique L2+L3 VPN bearer structure. In this bearer structure, L3 acts as a network layer of an Open System Interconnection (OSI) network model, and L2 acts as a link layer of the OSI network model. Fig. 1 is a schematic networking diagram of a typical L2+L3 VPN for mobile backhaul. As shown in Fig. 1, a typical L2+L3 VPN adopts L2 VPN networking in the access layer, adopts L3 VPN networking in a convergence layer and the core layer, and adopts a bridging technique for connection at the edge between the L2 VPN and the L3 VPN.

The networking structure of the L2+L3 VPN is beneficial for network planning and construction. However, since the services borne by this network are divided by the L2 VPN and the L3 VPN, and each of the L2 VPN and the L3 VPN only bears a part of the service path, this kind of networking structure of the L2+L3 VPN may be inconvenient for service end-to-end maintenance.

In order to meet the requirements for IP-based service end-to-end maintenance and diagnosis, the following technologies are adopted. A Packet Internet Groper (Ping) may be adopted as a most simple maintenance tool for providing connectivity detection of an IP path. A Two-Way Active Measurement Protocol (TWAMP) Request for Comments (RFC) 5357 provides a rich L3 performance measurement function. However, these technologies are all L3 detection technologies. The L2+L3 VPN bearer network requires L2 devices to support L3 interfaces and addresses. This requirement poses many obstacles to the deployment of IP-based service end-to-end maintenance functions. First, an additional IP address may need to be configured and occupied in order to implement end-to-end L3 maintenance and diagnostic functions for service paths in the L2+L3 VPN, and the IP address may need to belong to the same IP network segment (i.e., have the same network mask) as the detected service. However, such a requirement cannot be met in many practical cases. For example, China Mobile typically plans to use 62 IP addresses in a network segment including 64 IP addresses as IP addresses for base station services, and use the remaining 2 IP address for maintenance and diagnosis, which is apparently unable to meet the maintenance and diagnosis requirements. Second, the IP address configured for the L2 device belongs to the same IP network segment as the service IP address, but is not exactly the same as the service IP address (since configuring the same IP address causes a problem of IP address conflict), therefore, the maintenance and diagnosis results based on this IP address cannot be fully representative of the actual situation of the practical service. To sum up, under the current networking structure of the L2+L3 VPN for the mobile backhaul, the planning and configuration of an L3 address for an L2 device influences IP-based service end-to-end maintenance and diagnosis.

### Summary

The following is a summary of subject matter described in detail in the present invention. This summary is not intended to limit the scope of the claims.

Embodiments of the present invention provide an L3 maintenance and diagnosis method, apparatus and system in an L2+L3 VPN, which may enable an L2 device to conveniently support L3 maintenance and diagnosis in an L2+L3 VPN for bearing a mobile backhaul service.

An L3 maintenance and diagnosis method in an L2+L3 VPN includes the following steps. An L2 device borrows an L3 address of a corresponding L3 interface. The L2 device, by borrowing the L3 address of the L3 interface, acts as a proxy of the L3 interface to perform L3 maintenance and diagnosis.

In an exemplary embodiment, an L3 device on which the L3 interface is located may be directly connected to the L2 device.

In an exemplary embodiment, the step that the L2 device borrows the L3 address of the corresponding L3 interface may include one of the following steps.

The L2 device may borrow the L3 address, which is statically configured via a configuration command, of the corresponding L3 interface.

Alternatively, the L2 device may borrow the L3 address, which is obtained by active L3 address monitoring, of the corresponding L3 interface.

In an exemplary embodiment, before the L2 device borrows the L3 address, which is obtained by active L3 address monitoring, of the corresponding L3 interface, the method may further include the following step. The L2 device may obtain the L3 address, which is able to be borrowed by the L2 device, of the L3 interface by active L3 address monitoring.

In an exemplary embodiment, the step that the L2 device obtains the L3 address, which is able to be borrowed by the L2 device, of the L3 interface by active L3 address monitoring may include one of the following steps:
monitoring a specific L3 Address Resolution Protocol (ARP) to obtain the L3 address which is able to be borrowed by the L2 device; or,
monitoring a specific L3 message to obtain the L3 address which is able to be borrowed by the L2 device.

A Layer 3 (L3) maintenance and diagnosis apparatus in a Layer 2 and Layer 3 (L2+L3) Virtual Private Network (VPN) is provided. The apparatus may be deployed in an L2 device and include: at least one L3 maintenance and diagnosis sub-entity, configured to borrow an L3 address of a corresponding L3 interface; and a processing module, configured to serve as a proxy of the L3 interface to perform L3 maintenance and diagnosis by borrowing the L3 address of the L3 interface.

In an exemplary embodiment, an L3 device on which the L3 interface is located may be directly connected to the L2 device.

In an exemplary embodiment, the L3 maintenance and diagnosis sub-entity may include:
a first address borrowing unit, configured to borrow the L3 address, which is statically configured via a configuration command, of the corresponding L3 interface; or,
a second address borrowing unit, configured to borrow the L3 address, which is obtained by active L3 address monitoring, of the corresponding L3 interface.

In an exemplary embodiment, the second address borrowing unit may be further configured to obtain the L3 address, which is able to be borrowed by the L2 device, of the L3 interface by active L3 address monitoring.

In an exemplary embodiment, the second address borrowing unit may be configured to:
monitor a specific L3 Address Resolution Protocol (ARP) to obtain the L3 address which is able to be borrowed by the L2 device; or,
monitor a specific L3 message to obtain the L3 address which is able to be borrowed by the L2 device.

A Layer 3 (L3) maintenance and diagnosis system in a Layer 2 and Layer 3 (L2+L3) Virtual Private Network (VPN) is provided. The system may include an L2 device and an L3 device. The L2 device may be configured to borrow an L3 address of a corresponding L3 interface, and serve as a proxy of the L3 interface to perform L3 maintenance and diagnosis by borrowing the L3 address of the L3 interface. The L3 interface may be located on the L3 device.

A computer-readable storage medium is provided. The computer-readable storage medium stores computer-executable instructions that implement the above method when being executed by a processor.

In some embodiments of the present invention, an L2 device borrows an L3 address of a corresponding L3 interface, and acts as a proxy of the L3 interface to perform L3 maintenance and diagnosis by borrowing the L3 address of the L3 interface. By virtue of the solution, some embodiments of the present invention enables an L2 device to conveniently support L3 maintenance and diagnosis in an L2+L3 VPN for bearing a mobile backhaul service.

By virtue of the solution in some embodiments of the present invention, an L2 device may borrow an L3 address to achieve L3 address simplified configuration or L3 address configuration free in an L2+L3 VPN for bearing a mobile backhaul service. The L3 device is enabled to conveniently support L3 maintenance and diagnosis, and thus support end-to-end L3 maintenance and diagnosis of a mobile backhaul service path, thereby solving a problem of service path division caused by L2+L3 VPN bridging networking.

Other aspects will become apparent upon reading and understanding the drawings and detailed description.

### Brief Description of the Drawings

Fig. 1 is a schematic networking diagram of a typical L2+L3 VPN for mobile backhaul;
Fig. 2 is a flowchart of an L3 maintenance and diagnosis method in an L2+L3 VPN provided by an embodiment of the present invention;
Fig. 3 is a schematic diagram of an L3 maintenance and diagnosis apparatus in an L2+L3 VPN according to an embodiment of the present invention;
Fig. 4 is a schematic diagram illustrating the deployment of An L3 interface entity and an L3 maintenance and diagnostic sub-entity according to an embodiment of the present invention; and
Fig. 5 is a schematic diagram illustrating an application scenario according to an embodiment of the present invention.

### Detailed Description of the Embodiments

The embodiments of the present disclosure will be described below in combination with the drawings. It may be appreciated that the embodiments described below are merely intended to illustrate and explain the present application, rather than to limit the present application.

Fig. 2 is a flowchart of an L3 maintenance and diagnosis method in an L2+L3 VPN provided by an embodiment of the present invention. As shown in Fig. 2, the L3 maintenance and diagnosis method in an L2+L3 VPN provided in the present embodiment includes the following steps:
In step 11, an L2 device borrows an L3 address of a corresponding L3 interface.

In an exemplary embodiment, an L3 device on which the L3 interface is located may be directly connected to the L2 device.

In an exemplary embodiment, the step 11 may include one of the following steps.

The L2 device may borrow the L3 address, which is statically configured via a configuration command, of the corresponding L3 interface.

Alternatively, the L2 device may borrow the L3 address, which is obtained by active L3 address monitoring, of the corresponding L3 interface.

In an exemplary embodiment, before the L2 device borrows the L3 address, which is obtained by active L3 address monitoring, of the corresponding L3 interface, the method may further include the following step. The L2 device may obtain the L3 address, which is able to be borrowed by the L2 device, of the L3 interface by active L3 address monitoring. In the exemplary embodiment, the step that the L2 device obtains the L3 address, which is able to be borrowed by the L2 device, of the L3 interface by active L3 address monitoring may include one of the following steps: monitoring a specific L3 Address Resolution Protocol (ARP) to obtain the L3 address which is able to be borrowed by the L2 device; or, monitoring a specific L3 message to obtain the L3 address which is able to be borrowed by the L2 device.

In step 12, the L2 device, by borrowing the L3 address of the L3 interface, acts as a proxy of the L3 interface to perform L3 maintenance and diagnosis.

An L3 maintenance and diagnosis apparatus in an L2+L3 VPN is provided in another embodiment of the present invention. The apparatus may be deployed in an L2 device and include at least one L3 maintenance and diagnosis sub-entity and a processing module. The L3 maintenance and diagnosis sub-entity may be configured to borrow an L3 address of a corresponding L3 interface. The processing module may be configured to serve as a proxy of the L3 interface to perform L3 maintenance and diagnosis by borrowing the L3 address of the L3 interface.

In an exemplary embodiment, an L3 device on which the L3 interface is located may be directly connected to the L2 device.

In an exemplary embodiment, the L3 maintenance and diagnosis sub-entity may include a first address borrowing unit or a second address borrowing unit.

The first address borrowing unit may be configured to borrow the L3 address, which is statically configured via a configuration command, of the corresponding L3 interface.

The second address borrowing unit may be configured to borrow the L3 address, which is obtained by active L3 address monitoring, of the corresponding L3 interface.

In an exemplary embodiment, the second address borrowing unit may be further configured to obtain the L3 address, which is able to be borrowed by the L2 device, of the L3 interface by active L3 address monitoring. In an exemplary embodiment, the second address borrowing unit may be configured to: monitor a specific L3 Address Resolution Protocol (ARP) to obtain the L3 address which is able to be borrowed by the L2 device; or, monitor a specific L3 message to obtain the L3 address which is able to be borrowed by the L2 device.

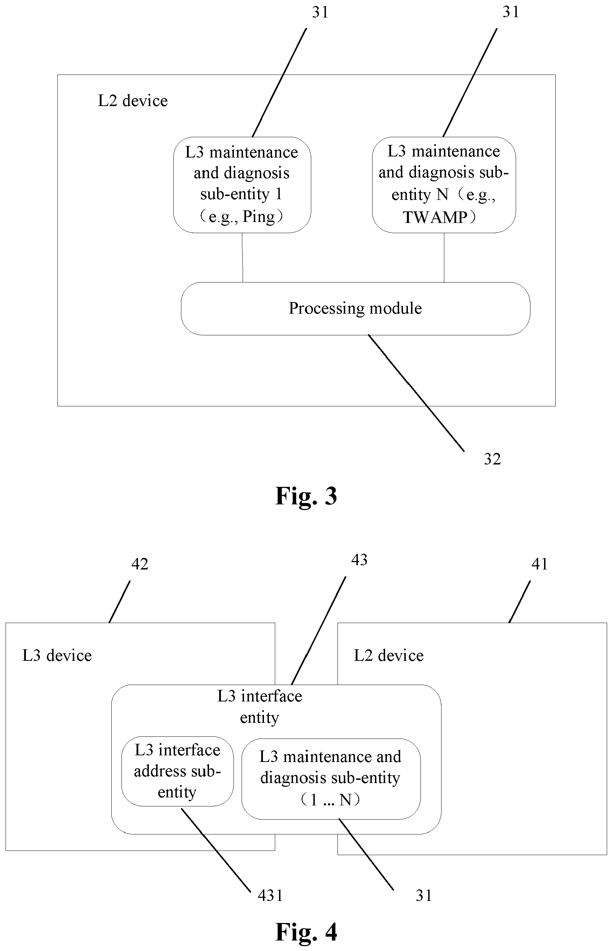

Fig. 3 is a schematic diagram of an L3 maintenance and diagnosis apparatus in an L2+L3 VPN according to an embodiment of the present invention. As shown in Fig. 3, the L3 maintenance and diagnosis apparatus in an L2+L3 VPN provided by the present embodiment may include at least one L3 maintenance and diagnosis sub-entity and a processing module. The processing flow of the foregoing modules may refer to the content illustrated above and therefore will not be repeated herein. In practical applications, the above modules may be implemented by executing, by a processor, a program/instructions stored in a memory.

An L3 maintenance and diagnosis system in an L2+L3 VPN is provided in still another embodiment of the present invention. The system may include an L2 device and an L3 device. The L2 device may be configured to borrow an L3 address of a corresponding L3 interface, and serve as a proxy of the L3 interface to perform L3 maintenance and diagnosis by borrowing the L3 address of the L3 interface. The L3 interface may be located on the L3 device.

A computer-readable storage medium is provided. The computer-readable storage medium stores computer-executable instructions that implement the above method when being executed by a processor.

The process of borrowing an L3 address by an L2 device may be implemented through at least one L3 maintenance and diagnosis sub-entity and an L3 interface entity. The at least one L3 maintenance and diagnosis sub-entity is logically a part of the L3 interface entity, and may be physically deployed on different devices. That is, the L3 interface entity and the L3 maintenance and diagnosis sub-entity may be physically separated. There may be one or more L3 maintenance and diagnosis sub-entities, and they may be fully or partially deployed on an L2 device.

Fig. 4 is a schematic diagram illustrating the deployment of An L3 interface entity and an L3 maintenance and diagnostic sub-entity according to an embodiment of the present invention. As shown in Fig. 4, N L3 maintenance and diagnosis sub-entities 31 are fully or partially deployed on an L2 device 41, and an L3 interface address sub-entity 431 of an L3 interface entity 43 is deployed on an L3 device 42. The L3 maintenance and diagnosis sub-entities 31 inherit an attribute (i.e., L3 address) of the L3 interface address sub-entity 431 of the L3 interface entity 43. Thus, the L2 device 41 can borrow the L3 address of the L3 interface by making the L3 maintenance and diagnosis sub-entities 31 configured on the L2 device 41 inherit the L3 address of the L3 interface entity 43, thereby supporting the L3 address configuration free of the L2 device 41. In addition, the L3 maintenance and diagnosis sub-entities 31 may also inherit other L3 attributes of the L3 interface entity 43. When the L3 interface entity 43 is fully supported on the L2 device 41, the L2 device 41 can possess full functions of the L3 interface.

The L3 maintenance and diagnosis sub-entities 31 may achieve the purpose that the L2 device 41 borrows the L3 address of the L3 interface by static configuration via configuration command or by active L3 address monitoring. The L3 address of the L3 interface entity to which each L3 maintenance and diagnosis sub-entity 31 belongs may be statically configured via a configuration command. Alternatively, each L3 maintenance and diagnosis sub-entity 31 may enable an active L3 address monitoring function to monitor the L3 address of the L3 interface entity to which the L3 maintenance and diagnosis sub-entity 31 belongs. The L3 maintenance and diagnosis sub-entity 31 may obtain the L3 address that can be borrowed by the L3 maintenance and diagnosis sub-entity 31 through active L3 address monitoring. For example, the L3 maintenance and diagnosis sub-entity 31 may monitor a specific L3 address Resolution Protocol (ARP) passing the L3 maintenance and diagnosis sub-entity 31, or the L3 maintenance and diagnosis sub-entity 31 may monitor a specific L3 message (e.g., a self-defined L3 message) passing the L3 maintenance and diagnosis sub-entity 31, so as to obtain the L3 address that can be borrowed by the L3 maintenance and diagnosis sub-entity 31.

The L3 address configured by the L3 maintenance and diagnosis sub-entity 31 through static configuration or obtained by the L3 maintenance and diagnosis sub-entity 31 through active L3 address monitoring may be used for address borrowing only. The L3 address is not used for configuring the L3 interface entity 43 of the L2 device 41, and is not used for implementing a full L3 interface entity function, including the creation of the L3 interface and responding to an L3 ARP. The borrowed L3 address is used for maintenance and diagnosis of the L3 interface entity 43, for example, acting as a proxy of the L3 interface for Ping detection response, or acting as a proxy for TWAMP measurement response of the L3 interface.

The technical solution will be illustrated below based on several embodiments.

### First embodiment

This embodiment illustrates the implementation of Ping detection response by an L2 device which acts as a proxy of the L3 interface by borrowing the L3 address.

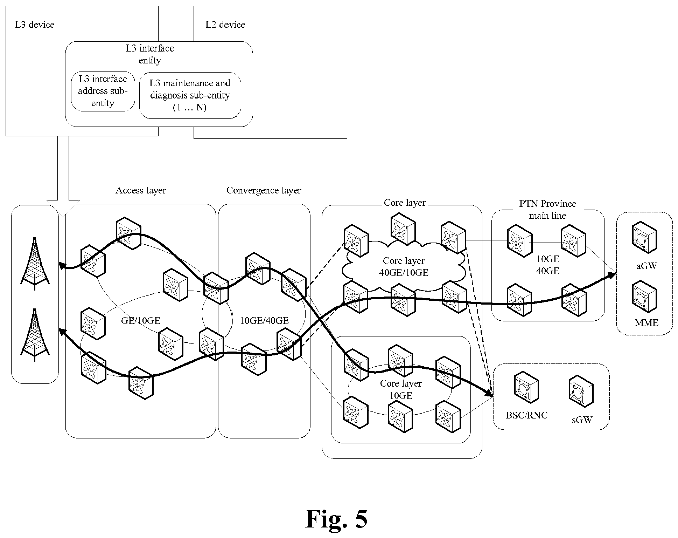

The networking of a mobile backhaul network is shown in Figure 5. The access layer adopts L2 VPN networking. When implementing an L2 VPN to L3 VPN end-to-end connectivity Ping detection for a mobile backhaul service, the Ping processing is performed either from a wireless core network to a base station, or from an L3 VPN landing point, i.e., an L3 device to a base station. Although such a method can detect the connectivity between a wireless base station and a wireless core network or between a wireless base station and an L3 VPN landing point, the connectivity between an L2 VPN landing point and an L3 VPN landing point cannot be detected.

In this embodiment, the L2 device borrows the L3 address of the wireless base station to act as a proxy of the wireless base station to implement the Ping response, and an end-to-end connectivity detection between the L2 VPN access point and the L3 VPN landing point can be achieved. The solution of this embodiment is described as follows.

The wireless base station provides an L3 interface entity and can support a Ping function of the L3 maintenance and diagnosis sub-entity. The L2 device of the L2 VPN access point that is connected with the wireless base station deploys a Ping function of the L3 maintenance and diagnosis sub-entity.

Instead of creating an L3 interface, the L2 device directly borrows an L3 address of the wireless base station. The L3 interface entity is deployed on a wireless base station and an L2 device in an L2 VPN access layer. The L3 interface address sub-entity is deployed on a wireless base station, and the Ping function of the L3 maintenance and diagnosis sub-entity is deployed on the L2 device in the L2 VPN access layer.

The Ping function of the L3 maintenance and diagnosis sub-entity deployed on the L2 device may inherit an address attribute of the L3 interface entity. The L3 interface address sub-entity of the L3 interface entity is deployed on the wireless base station.

The L2 device is configured, by a static command, to enable an L3 Ping proxy response function, and the L3 interface address (i.e., the L3 interface address of the wireless base station) for Ping proxy response is statically configured. The L2 device itself does not create an L3 interface, and other functions of the L3 interface of the wireless base station are not affected. Alternatively, the L2 device enables an L3 Ping proxy response function and an L3 address monitoring mode, so that the L2 device can obtain the L3 address of a base station, with which the wireless base station is connected, by monitoring an L3 ARP of the wireless base station.

After the L3 maintenance and diagnosis Ping function is enabled, the L2 device immediately monitors service flows passing the access point of the L2 device. After detecting a Ping request message, the L2 device acts as a proxy of the L3 interface entity to respond to the Ping request. Similarly, the L2 device may also act as a proxy of the L3 interface entity to initiate a Ping request.

### Second embodiment

This embodiment illustrates the implementation of TWAMP performance measurement by an L2 device which acts as a proxy of the L3 interface by borrowing the L3 address.

The networking of a mobile backhaul network is shown in Figure 5. The access layer adopts L2 VPN networking. When implementing an L2 VPN to L3 VPN end-to-end L3 TWAMP performance measurement for a mobile backhaul service, the TWAMP measurement is initiated either from a wireless core network to a base station, or from an L3 VPN landing point, i.e., an L3 device to a base station. Although such a method can measure the L3 performance between a wireless base station and a wireless core network or between a wireless base station and an L3 VPN landing point, the end-to-end L3 performance between an L2 VPN landing point and an L3 VPN landing point cannot be measured.

In this embodiment, the L2 device can borrow the L3 address of the wireless base station to implement the L3 TWAMP response and achieve the L3 performance measurement between an L2 VPN landing point and an L3 VPN landing point. The solution of this embodiment is described as follows.

The wireless base station provides an L3 interface entity and can support a TWAMP performance measurement function of the L3 maintenance and diagnosis sub-entity. The L2 device of the L2 VPN access point that is connected with the wireless base station deploys a TWAMP performance measurement function of the L3 maintenance and diagnosis sub-entity.

Instead of creating an L3 interface, the L2 device directly borrows an L3 address of the wireless base station. The L3 interface entity is deployed on a wireless base station and an L2 device in an L2 VPN access layer. The L3 interface address sub-entity is deployed on a wireless base station, and the TWAMP performance measurement function of the L3 maintenance and diagnosis sub-entity is deployed on the L2 device in the L2 VPN access layer.

The TWAMP performance measurement function of the L3 maintenance and diagnosis sub-entity deployed on the L2 device may inherit an address attribute of the L3 interface entity. The L3 interface address sub-entity of the L3 interface entity is deployed on the wireless base station.

The L2 device is configured, by a static command, to enable an L3 TWAMP performance measurement proxy response function, and the L3 interface address (i.e., the L3 interface address of the wireless base station) for TWAMP response is statically configured. The L2 device itself does not create an L3 interface, and other functions of the L3 interface of the wireless base station are not affected. Alternatively, the L2 device enables an L3 TWAMP response function and an L3 address monitoring mode, so that the L2 device can obtain the L3 address of a base station, with which the wireless base station is connected, by monitoring an L3 ARP of the wireless base station.

After the L3 maintenance and diagnosis TWAMP function is enabled, the L2 device immediately monitors service flows passing the access point of the L2 device. After detecting a TWAMP protocol message, the L2 device acts as a proxy of the L3 interface entity to perform PWAMP response. Similarly, the L2 device may also act as a proxy of the L3 interface entity to initiate a TWAMP measurement.

### Third embodiment

This embodiment illustrates the implementation of Y.1564 performance measurement by an L2 device which acts as a proxy of the L3 interface by borrowing the L3 address.

The networking of a mobile backhaul network is shown in Figure 5. The access layer adopts L2 VPN networking. When implementing an L2 VPN to L3 VPN end-to-end Y.1564 performance measurement for a mobile backhaul service, the Y.1564 measurement is performed either from a wireless core network to a base station, or from an L3 VPN landing point, i.e., an L3 device to a base station. Although such a method can measure the L3 performance between a wireless base station and a wireless core network or between a wireless base station and an L3 VPN landing point, the end-to-end L3 performance between an L2 VPN landing point and an L3 VPN landing point cannot be measured.

In this embodiment, the L2 device borrows the L3 address of the wireless base station to act as a proxy of the wireless base station to implement Y.1564 response, and an end-to-end L3 performance measurement between the L2 VPN access point and the L3 VPN landing point can be achieved. The solution of this embodiment is described as follows.

The wireless base station provides an L3 interface entity and can support a Y.1564 performance measurement function of the L3 maintenance and diagnosis sub-entity. The L2 device of the L2 VPN access point that is connected with the wireless base station deploys a Y.1564 performance measurement function of the L3 maintenance and diagnosis sub-entity.

Instead of creating an L3 interface, the L2 device directly borrows an L3 address of the wireless base station. The L3 interface entity is deployed on a wireless base station and an L2 device in an L2 VPN access layer. The L3 interface address sub-entity is deployed on a wireless base station, and the Y.1564 performance measurement function of the L3 maintenance and diagnosis sub-entity is deployed on the L2 device in the L2 VPN access layer.

The Y.1564 performance measurement function of the L3 maintenance and diagnosis sub-entity deployed on the L2 device may inherit an address attribute of the L3 interface entity. The L3 interface address sub-entity of the L3 interface entity is deployed on the wireless base station.

The L2 device is configured, by a static command, to enable an L3 Y.1564 performance measurement proxy response function, and the L3 interface address (i.e., the L3 interface address of the wireless base station) for Y.1564 response is statically configured. The L2 device itself does not create an L3 interface, and other functions of the L3 interface of the wireless base station are not affected. Alternatively, the L2 device enables an L3 Y.1564 response function and an L3 address monitoring mode, so that the L2 device can obtain the L3 address of a base station, with which the wireless base station is connected, by monitoring an L3 ARP of the wireless base station.

After the L3 maintenance and diagnosis Y.1564 function is enabled, the L2 device immediately monitors service flows passing the access point of the L2 device. After detecting a Y.1564 protocol message, the L2 device acts as a proxy of the L3 interface entity to perform Y.1564 response. Similarly, the L2 device may also act as a proxy of the L3 interface entity to initiate Y. 1564 measurement.

Still another embodiment of the present invention provides a computer readable storage medium storing computer executable instructions that, when executed by a processor, implement the L3 maintenance and diagnosis method in the L2+L3 VPN as described above.

A person of ordinary skill in the art should understand that all or part of the steps of the foregoing embodiments may be implemented by using a computer program flow. The computer program may be stored in a computer readable storage medium and can be implemented on a corresponding hardware platform (e.g., a system, an apparatus, a device, a component, etc.). When being executed, the computer program can implement one or a combination of the steps of the method embodiments.

Optionally, all or part of the steps in the above embodiments may also be implemented by using integrated circuits. These steps may be separately manufactured as one integrated circuit module or multiple modules or steps may be made into a single integrated circuit module.

The apparatuses/functional modules/functional units in the above embodiments may be implemented by using general-purpose computing devices. These apparatuses/functional modules/functional units may be centralized on a single computing device or distributed on a network formed by multiple computing devices.

When the apparatuses/functional modules/functional units in the foregoing embodiments are implemented in the form of software function modules and are sold or used as an independent product, they can be stored in a computer-readable storage medium. The above-mentioned computer-readable storage medium may be a read-only memory, a magnetic disk, an optical disk, or the like.

The basic principles and main features of the application and advantages of the application have been shown and described above. The present application is not limited to the above embodiments. The above-described examples and embodiments described in the specification are only illustrative of the principles of the present invention. The present application also has a variety of variations and improvements, and such variations and improvements, when no departing from the scope of the present application, should fall within the scope of the claims of the present invention.

### Industrial Applicability

By virtue of the solution in some embodiments of the present invention, an L2 device may borrow an L3 address to achieve L3 address simplified configuration or L3 address configuration free in an L2+L3 VPN for bearing a mobile backhaul service. The L3 device is enabled to conveniently support L3 maintenance and diagnosis, and thus support end-to-end L3 maintenance and diagnosis of a mobile backhaul service path, thereby solving a problem of service path division caused by L2+L3 VPN bridging networking.

## Claims

1. A Layer 3, L3, maintenance and diagnosis method in a Layer 2 and Layer 3, L2+L3, Virtual Private Network, VPN, comprising:
an L2 device borrowing an L3 address of a corresponding L3 interface; and
the L2 device, by borrowing the L3 address of the L3 interface, acting as a proxy of the L3 interface to perform L3 maintenance and diagnosis.

2. The method as claimed in claim 1, wherein an L3 device on which the L3 interface is located is directly connected to the L2 device.

3. The method as claimed in claim 1, wherein the L2 device borrowing the L3 address of the corresponding L3 interface comprises:
the L2 device borrowing the L3 address, which is statically configured via a configuration command, of the corresponding L3 interface; or,
the L2 device borrowing the L3 address, which is obtained by active L3 address monitoring, of the corresponding L3 interface.

4. The method as claimed in claim 3, wherein before the L2 device borrows the L3 address, which is obtained by active L3 address monitoring, of the corresponding L3 interface, the method further comprises: the L2 device obtaining the L3 address, which is able to be borrowed by the L2 device, of the L3 interface by active L3 address monitoring.

5. The method as claimed in claim 4, wherein the L2 device obtaining the L3 address, which is able to be borrowed by the L2 device, of the L3 interface by active L3 address monitoring comprises:
monitoring a specific L3 Address Resolution Protocol, ARP, to obtain the L3 address which is able to be borrowed by the L2 device; or,
monitoring a specific L3 message to obtain the L3 address which is able to be borrowed by the L2 device.

6. A Layer 3, L3, maintenance and diagnosis apparatus in a Layer 2 and Layer 3, L2+L3, Virtual Private Network, VPN, wherein the apparatus is deployed in an L2 device and comprises:
at least one L3 maintenance and diagnosis sub-entity, configured to borrow an L3 address of a corresponding L3 interface; and
a processing module, configured to serve as a proxy of the L3 interface to perform L3 maintenance and diagnosis by borrowing the L3 address of the L3 interface.

7. The apparatus as claimed in claim 6, wherein an L3 device on which the L3 interface is located is directly connected to the L2 device.

8. The apparatus as claimed in claim 6, wherein the L3 maintenance and diagnosis sub-entity comprises:
a first address borrowing unit, configured to borrow the L3 address, which is statically configured via a configuration command, of the corresponding L3 interface; or,
a second address borrowing unit, configured to borrow the L3 address, which is obtained by active L3 address monitoring, of the corresponding L3 interface.

9. The apparatus as claimed in claim 8, wherein the second address borrowing unit is further configured to obtain the L3 address, which is able to be borrowed by the L2 device, of the L3 interface by active L3 address monitoring.

10. The apparatus as claimed in claim 9, wherein the second address borrowing unit is configured to:
monitor a specific L3 Address Resolution Protocol, ARP, to obtain the L3 address which is able to be borrowed by the L2 device; or,
monitor a specific L3 message to obtain the L3 address which is able to be borrowed by the L2 device.

11. A Layer 3, L3, maintenance and diagnosis system in a Layer 2 and Layer 3, L2+L3, Virtual Private Network, VPN, comprising: the L2 device and the L3 device which are present in the L3 maintenance and diagnosis apparatus in a L2+L3 VPN as claimed in any one of claims 6 to 10, wherein the L2 device is configured to borrow an L3 address of a corresponding L3 interface, and serve as a proxy of the L3 interface to perform L3 maintenance and diagnosis by borrowing the L3 address of the L3 interface, wherein the L3 interface is located on the L3 device.
